# EUROPÄISCHE PATENTANMELDUNG

(11) **EP 3 534 448 A1**
(43) Veröffentlichungstag der Anmeldung: **04.09.2019**
(21) Anmeldenummer: 18159038.1
(22) Anmeldetag: 28.02.2018
(51) Int. Cl.: H01M 8/18, H01M 4/86

(54) **REDOX-FLUSSBATTERIE MIT WENIGSTENS EINER ZELLE UND EINEM ELEKTRODENELEMENT SOWIE VERFAHREN ZUR HERSTELLUNG EINER LEITERSTRUKTUR EINES ELEKTRODENELEMENTS EINER REDOX-FLUSSBATTERIE**

(71) Anmelder: Siemens Aktiengesellschaft, 80333 München (DE)
(72) Erfinder: Fleck, Robert, 91325 Adelsdorf (DE); Schricker, Barbara, 91058 Erlangen (DE); Wolfschmidt, Holger, 91058 Erlangen (DE)

(57) **Zusammenfassung**

Die Erfindung betrifft eine Redox-Flussbatterie (10) mit wenigstens einer Zelle (18), welche durch eine Membran (20) in Halbzellen (22) unterteilt ist, welche jeweils einen Stromableiter (24) und ein Elektrodenelement (12) umfasst, welches in einem von einem Elektrolyt (26) durchströmbaren Innenraum (28) der jeweiligen Halbzelle (22) angeordnet ist und eine Elektrode (14) sowie eine Leitstruktur (16) aufweist, wobei die Leitstruktur (16) zum Leiten des Elektrolyten (26) in die zugeordnete Elektrode (14) integriert ist. Ferner betrifft die Erfindung ein Verfahren zur Herstellung wenigstens einer Leitstruktur eines Elektrodenelements einer Redox-Flussbatterie (10).

## Beschreibung

Die Erfindung betrifft eine Redox-Flussbatterie mit wenigstens einer Zelle gemäß dem Oberbegriff des Patentanspruchs 1. Ferner betrifft die Erfindung ein Verfahren zum Herstellen wenigstens einer Leitstruktur eines Elektrodenelements einer Redox-Flussbatterie gemäß dem Oberbegriff des Patentanspruchs 15.

Eine Redox-Flussbatterie, welche auch als Flüssigbatterie, Nasszelle oder nach dem Englischen als Redox-Flow-Batterie bezeichnet wird, ist eine Ausführungsform eines Akkumulators. Die Redox-Flussbatterie kann zukünftig eine große Bedeutung bei der Speicherung elektrischer Energie aus regenerativen Energiequellen erlangen, da sie fluktuierende Energien wie Sonnen- und/oder Windenergie speichern und bei Bedarf wieder abgeben kann. Ein die Redox-Flussbatterie charakterisierendes Merkmal ist, dass die Speicherung der chemischen Energie nicht wie üblich in einem Feststoff, sondern in einem flüssigen Elektrolyten erfolgt. Dieser lagert in der Regel in zwei separaten Tanks und kann bei Bedarf in einer Zelle der Redox-Flussbatterie umgesetzt werden. In einem Inneren der Zelle befinden sich zwei Elektroden, eine Anode und eine Kathode. Eine, insbesondere ionenleitende, Membran trennt beziehungsweise unterteilt die Zelle in zwei Halbzellen, dabei ist jeweils eine Elektrode in jeweils einer der Halbzellen angeordnet. Eine häufig verwendeter Typ der Redox-Flussbatterie ist die Vanadium-Redox-Flussbatterie, bei welcher in beiden Elektrolyten, also dem Elektrolyten, welcher an einer Anode vorbeifließt sowie dem Elektrolyten, welcher an einer Kathode vorbeifließt, Vanadiumverbindungen enthalten sind. Beim Entladen der Redox-Flussbatterie findet dann an der Anode folgende Oxidation statt: V²⁺↔HV³⁺+e⁻. An der Kathode findet beim Entladen folgende Reduktion statt: V0₂⁺+2H⁺+e⁻↔VO²⁺₊H₂O. An der Anode werden Elektronen zur Verfügung gestellt, welche die Kathode aufnimmt, wodurch ein Strom zwischen beiden Elektroden fließt. Aufgrund der jeweiligen Elektrodenreaktion entsteht zwischen den beiden Halbzellen ein Ladungsungleichgewicht, weshalb ein Ladungsaustausch durch die Membran stattzufinden hat. Diese Reaktion ist bei der Redox-Flussreaktion umkehrbar, sodass die Redox-Flussbatterie wieder aufgeladen werden kann. In der Regel umfasst solch eine Redox-Flussbatterie nicht nur eine Zelle, sondern es sind mehrere Zellen zu einem sogenannten Stack gestapelt, wodurch beispielsweise ein Vielfaches an Leistung erreicht werden kann.

Ein Vorteil von Redox-Flussbatterien liegt darin, dass sich ihre Speicherkapazität unabhängig von ihrer elektrischen Leistung optimieren lassen kann. So ist die Speicherkapazität in erster Linie abhängig von der Größe der Elektrolyttanks. Die elektrische Leistung, also die Menge an elektrischer Energie pro Zeiteinheit, kann auf verschiedene Arten verbessert werden. Beispielsweise durch Optimierung der Elektroden, der Membran oder des beziehungsweise der Elektrolyten sowie die Größe des Stacks.

Beispielsweise sollte die Elektrode eine hohe chemische und mechanische Stabilität aufweisen. Zusätzlich sollte sie eine besonders große Leitfähigkeit und eine besonders große aktive Oberfläche aufweisen. Die Hauptfunktion der Membran ist der Ladungsausgleich, also der Austausch von, insbesondere selektierbaren, Ionen. Dabei ist jedoch eine Vermischung der Elektrolyten, welche durch die jeweilige Halbzelle fließt, mit dem jeweils anderen Elektrolyten nicht erwünscht. Dabei sollte auch die Membran chemisch stabil sein und einen geringen Widerstand aufweisen. Für den Elektrolyten kann beispielsweise eine besonders hohe Löslichkeit von Ionen vorteilhaft sein.

Nachteilig bei Redox-Flussbatterien kann beispielsweise das Auftreten von hohen elektrischen und/oder ionischen Widerständen sein, welche zu Verlusten führen können. Ferner können eine eingeschränkte Reaktionskinetik oder hohe Diffusionswiderstände ebenfalls zu Verlusten führen. Eine Spannungseffizienz kann beispielsweise durch Polarisationsverlust insbesondere während eines Ladezyklus beeinflusst werden. Diffusionswiderstände kommen beispielsweise dadurch zustande, dass eine Umlagerung von Elektronen an der Dreiphasengrenze durch Diffusionsprozesse geschehen kann. Daher sollte innerhalb der gesamten Zelle beziehungsweise Halbzelle eine möglichst gleiche Konzentration an beispielsweise Ionen und/oder Elektronen im Elektrolyten vorliegen, das heißt der Elektrolyt sollte besonders homogen sein. Zur Reduktion von konzentrationsabhängigen Verlusten kann unter anderem der Volumenfluss des Elektrolyten über die Zelle erhöht werden. Dies kann jedoch zu einer Zunahme hydrodynamischer Druckverluste in der Zelle führen.

Die genannten Verluste können alle gleichzeitig in der Elektrode beziehungsweise an Grenzflächen zwischen Elektrode und Elektrolyt in der Redox-Flussbatterie auftreten. In konventionellen Redox-Flussbatterien wird der Elektrolyt mittels eines sogenannten Flow-Fields (Strömungsfeld) an beziehungsweise durch die Elektrode gepumpt. Dabei bildet das Flow Field eine Leitstruktur, welche als Teil eines Elektrodenelements an der Elektrode, jedoch getrennt von dieser, angeordnet ist.

Die US 9 166 243 B2 zeigt eine Flussbatterie, welche eine erste flüssigkeitsporöse Elektrode, eine zweite flüssigkeitsporöse Elektrode, welche von der ersten flüssigkeitsporösen Elektrode beabstandet ist, und eine Ionenaustauschmembran umfasst. Die Ionenaustauschmembran ist zwischen der ersten Elektrode und der zweiten Elektrode angeordnet. Ein erstes und ein zweites Strömungsfeld sind benachbart zu der jeweiligen ersten Elektrode und der zweiten Elektrode angeordnet, wobei die Strömungsfelder Kanäle mit zumindest teilweise blockierten Ein- beziehungsweise Auslässen aufweisen.

Des Weiteren zeigt die US 8 808 897 B2 eine Elektrodenstruktur einer Vanadium-Redox-Flow-Batterie, welche eine Protonenaustauschmembran, zwei Graphitpapiere, zwei Graphit-Filzeinheiten, zwei Plättchen, zwei Graphitplatten, zwei Metallplatten und eine Verriegelungsfixiervorrichtung aufweist.

Es ist Aufgabe der vorliegenden Erfindung, eine Redox-Flussbatterie zu schaffen, in welcher der Elektrolyt besonders vorteilhaft an die Elektrode beziehungsweise durch die Elektrode geführt werden kann.

Diese Aufgabe wird erfindungsgemäß durch eine Redox-Flussbatterie gemäß dem Patentanspruch 1 gelöst. Ferner offenbart der Patentanspruch 15 ein Verfahren zur Herstellung einer Leitstruktur eines Elektrodenelements einer Redox-Flussbatterie. Vorteilhafte Ausgestaltungen mit zweckmäßigen Weiterbildungen der Erfindung sind in den übrigen Ansprüchen angegeben.

Ein erster Aspekt der Erfindung betrifft eine Redox-Flussbatterie mit wenigstens einer Zelle, welche durch eine Membran in Halbzellen unterteilt ist. Die jeweilige Halbzelle umfasst einen Stromableiter und ein Elektrodenelement, welches in einem von einem Elektrolyt durchströmbaren Innenraum der jeweiligen Halbzelle angeordnet ist und eine Elektrode sowie eine Leitstruktur aufweist. Der Elektrolyt kann vorteilhafterweise mittels einer Pumpe in beziehungsweise durch die jeweilige Halbzelle gepumpt beziehungsweise gefördert werden, sodass der Elektrolyt durch die Halbzelle fließen beziehungsweise strömen kann.

Um nun den Elektrolyten besonders vorteilhaft an beziehungsweise durch die Elektrode zu führen beziehungsweise zu fördern, ist die Leitstruktur zum Leiten des Elektrolyten erfindungsgemäß in die zugeordnete Elektrode integriert. Dabei liegt der Erfindung die Erkenntnis zugrunde, dass beispielsweise bei Elektrolyten, deren Redox-Paare eine besonders schnelle Reaktionskinetik aufweisen, Verluste durch Diffusionsüberspannungen dominieren können. Bestehende bisherige Konzepte für die Durchströmung der Zelle mit Elektrolyten erweisen sich dabei als unzulänglich. So wird im Stand der Technik zum einen der Elektrolyt direkt durch die Elektrode gepumpt oder der Elektrolyt wird in Kanälen an der Elektrode vorbei gepumpt. Dabei spricht man zum einem von einer Flow-Through-, zum anderen von einer Flow-By-Struktur.

Im Unterschied dazu ist bei der erfindungsgemäßen Redox-Flussbatterie die Leitstruktur zusammen mit der Elektrode, insbesondere einstückig und innenliegend, ausgebildet. Dadurch ergibt sich der Vorteil, dass die durch die Trennung von Leitstruktur und Elektrode verursachten Übergangswiderstände und ein daraus resultierender Spannungsabfall, welcher zu Verlusten führen kann, nicht auftreten. Ferner kann eine Vermischung des Elektrolyten realisiert werden, sodass Diffusionswiderstände besonders gering ausfallen. Dies wird durch hydrodynamische Berechnungen sowie Versuchsreihen gestützt, welche darüber hinaus in Einklang mit in Analogie durchgeführten Simulationsmodellen eines vernetzten Widerstandsnetzwerks sind.

In vorteilhafter Ausgestaltung der Erfindung ist die Elektrode als Vlies und/oder Papier und/oder Schaum und/oder Netz und/oder Geflecht und/oder Filz und/oder Schwamm ausgebildet, in welches beziehungsweise welchen die Leitstruktur integriert ist. Die Elektrode kann dadurch beziehungsweise somit als besonders durchgängig für den Elektrolyten ausgebildet werden. Ferner kann dadurch eine besonders hohe Leitfähigkeit mit zugleich einer besonders hohen aktiven Oberfläche ausgebildet werden. Eine Reduktion beziehungsweise Oxidation in der Redox-Flussbatterie findet an der sogenannten Dreiphasengrenze statt. Je größer somit eine aktive Oberfläche in der Elektrode, beispielsweise durch die Porosität des die Elektrode bildenden Werkstoffs, ausfällt, desto besser kann die Reduktion beziehungsweise Oxidation stattfinden. Ferner ist durch die Verwendung von Vlies und/oder Papier und/oder Schaum und/oder Netz und/oder Geflecht und/oder Filz und/oder Schwamm als Grundstruktur der Elektrode eine besonders gute Verteilung des flüssigen Elektrolyten in der Elektrode möglich. Als Werkstoff beziehungsweise Material der Grundstruktur und somit der Elektrode kann besonders vorteilhafterweise Graphit verwendet werden, sodass die Elektrode besonders flexibel und besonders porös in ihrer Morphologie ausgebildet werden kann.

In vorteilhafter Ausgestaltung der Erfindung ist die Leitstruktur durch unterschiedliche Dichtebereiche der Elektrode ausgebildet. Mit anderen Worten weist die Elektrode, welche insbesondere als Vlies ausgebildet ist, mehrere Dichtebereiche, also Bereich unterschiedlicher Dichte, auf. Dabei haben benachbarte Dichtebereiche jeweils eine zueinander unterschiedliche Dichte. Simulationsberechnungen deuten darauf hin, dass die Dichtebereiche zueinander vorteilhafterweise asymmetrisch angeordnet sind, um eine Verteilung des Elektrolyten in der Elektrode zu begünstigen. Dabei kann die jeweilige Dichte insbesondere durch die Porosität beziehungsweise Faserstruktur des Werkstoffs der Elektrode beeinflusst sein. Mittels der unterschiedlichen Dichtebereiche kann der Elektrolyt beziehungsweise können die Elektrolyten gezielt an eine Reaktionsfläche, welche insbesondere die beispielsweise durch Poren gebildete, aktive Oberfläche der Elektrode ist, geführt werden. Darüber hinaus können Druckverluste als auch Verluste durch Diffusionspolarisation besonders gering gehalten werden. Ferner können durch die Dichtebereiche Verwirbelungen und/oder Vergleichmäßigungen beziehungsweise eine Homogenisierung des Elektrolyten stattfinden. Durch die Ausbildung unterschiedlicher Dichtebereiche in der Elektrode kann die Redox-Flussbatterie ferner besonders vorteilhaft mit Elektrolyten, welche eine besonders schnelle Reaktionskinetik aufweisen, betrieben werden. Darüber hinaus ergeben sich die genannten Vorteile auch für Redox-Flussbatterien mit konventionellen Elektrolyten, wie beispielsweise Vanadium.

In vorteilhafter Ausgestaltung der Erfindung ist der jeweilige Dichtebereich der Elektrode abgesteppt. Mit anderen Worten wird in dem porösen, insbesondere faserstrukturierten, Werkstoff der Elektrode, insbesondere dem Vlies und/oder Papier und/oder einem weiteren der oben genannten Grundstrukturen, beispielsweise mittels einer Faser und/oder eines Fadens durch Absteppen ein jeweiliger Dichtebereich ausgebildet. Durch das Absteppen der Dichtebereiche kann die Redox-Flussbatterie besonders langlebig betrieben werden, da die Dichtebereiche durch das Absteppen besonders stabil ausbildbar beziehungsweise ausgebildet sind. Ferner können die Kosten der Redox-Flussbatterie durch das Absteppen beispielsweise besonders gering gehalten werden.

In vorteilhafter Ausgestaltung der Erfindung sind die Dichtebereiche in der Elektrode mittels einer Formstruktur des Stromableiters eingeprägt, welcher in Kontakt mit der Elektrode ist. Mit anderen Worten weist der Stromableiter an wenigstens einer seiner Außenumfangsseiten beziehungsweise Außenoberfläche eine, insbesondere dreidimensionale, Struktur auf. Diese Struktur bildet die Formstruktur aus und drückt quasi als Negativ in einem zusammengebauten Zustand der Redox-Flussbatterie auf die mit ihr in Kontakt stehende Elektrode, sodass durch ein Verpressen unterschiedliche Dichtebereiche in der jeweiligen Elektrode ausgebildet sind. Somit können vorteilhafterweise der jeweilige Dichtebereiche besonders langlebig ausgebildet sein und/oder Kosten gering gehalten werden.

In vorteilhafter Ausgestaltung der Erfindung umfasst die Leitstruktur einen Kanal, welcher einen eckigen und/oder runden Querschnitt aufweist. Mit anderen Worten ist ein Kanal in die Elektrode integriert beziehungsweise eingebracht, welcher insbesondere besonders vorteilhaft von dem Elektrolyten durchströmbar ist beziehungsweise durchströmt werden kann. Ein Inneres des Kanals ist insbesondere frei von dem Werkstoff, aus welchem die Elektrode gebildet ist, also dem Elektrodenmaterial. Die Fläche senkrecht zur Längserstreckungsrichtung des Kanals hat eine eckige und/oder runde Grundfläche. Dabei kann bei einem eckigen Querschnitt die Querschnittsfläche ein gleichmäßiges oder ungleichmäßiges Polygon sein. Ist der Querschnitt rund, kann die Querschnittsfläche sowohl kreisförmig als auch beispielsweise ellipsenförmig ausgebildet sein. Durch den Kanal der Leitstruktur kann der Elektrolyt besonders vorteilhaft durch die Elektrode geführt und darüber hinaus in dieser verteilt werden.

In vorteilhafter Ausgestaltung der Erfindung weist die Querschnittsfläche des Kanals, welche senkrecht zur Längserstreckung des Kanals liegt, entlang dieser Längserstreckungsrichtung, insbesondere stetig, eine veränderte Größe auf. Zusätzlich oder alternativ ist in vorteilhafter Ausgestaltung der Erfindung ein Formelement an einer Kanalwandung angeordnet, welches in zumindest einem Teilbereich des Kanals die Querschnittsfläche verkleinert oder vergrößert. Mit anderen Worten kann der Kanal derart ausgebildet sein, dass er seine Querschnittsfläche entlang seines Verlaufs ändert beziehungsweise verändern kann, das heißt dass die Querschnittsfläche entlang der Flussrichtung des Elektrolyten durch den Kanal sich erweitern oder verjüngen kann. Auch ist denkbar, dass sich die Querschnittsfläche erst erweitert und dann verkleinert, um sich in Flussrichtung gesehen im Anschluss daran wieder zu erweitern oder umgekehrt. Das wenigstens eine zusätzlich dazu an der Kanalwandung ausgebildete Formelement kann beispielsweise eine konkave Ausbuchtung oder eine konvexe Einbuchtung sein, sodass das Formelement ebenfalls dazu ausgebildet ist, die Querschnittsfläche des Kanals zumindest partiell zu verändern. Durch eine Änderung der Querschnittsfläche des Kanals kann der Druck des durch den Kanal hindurch strömenden Elektrolyten verändert werden, sodass es beispielsweise zu einer Verwirbelung des Elektrolyten in dem Kanal kommt, was zu einer Durchmischung beziehungsweise einer Umwälzung in dem Elektrolyten führen kann, wodurch beispielsweise die Ionen des Elektrolyten besonders vorteilhaft an der Elektrode abgegeben beziehungsweise aufgenommen werden können.

In vorteilhafter Ausgestaltung der Erfindung ist wenigstens eine Begrenzungsfläche des Kanals, welche insbesondere Teil der Kanalwandung sein kann, zumindest teilweise deckungsgleich mit einem Teilbereich einer Oberfläche, insbesondere Außenoberfläche, der Elektrode. Mit anderen Worten teilen sich der Kanal und die Elektrode eine gemeinsame Grenze beispielsweise zu dem Stromableiter. Dadurch ist es möglich, den Kanal beispielsweise besonders groß auszubilden, sodass dieser die Elektrode zumindest in einem Teilbereich beispielsweise vollständig durchdringen kann. Dadurch kann der Elektrolyt beispielsweise besonders vorteilhaft zu einzelnen Bereichen der Elektrode geführt beziehungsweise geleitet werden.

In vorteilhafter Ausgestaltung der Erfindung umfasst die Leitstruktur mehrere Kanäle, wobei die Kanäle zueinander im Wesentlichen parallel ausgerichtet sind. Das heißt, die jeweilige Längserstreckungsrichtung eines jeweiligen Kanals ist zu den Längserstreckungsrichtungen des wenigstens einen anderen Kanals im Wesentlichen parallel. Dabei ist unter im Wesentlichen parallel zu verstehen, dass die Längserstreckungsrichtung eines Kanals zu einem anderen höchstens um einen kleinen Winkel verschoben ist, sodass beispielsweise die Längserstreckungsrichtungen der Kanäle insgesamt beispielsweise entlang der Längserstreckungsrichtung der Elektrode orientiert sind. Durch die Ausbildung mehrerer Kanäle kann die Elektrode, insbesondere spezielle Teilbereiche der Elektrode, besonders vorteilhaft durch den, insbesondere in die Halbzelle eingepumpten beziehungsweise geförderten, Elektrolyten erreicht werden, sodass beispielsweise die innere Oberfläche beziehungsweise Reaktionsfläche der Elektrode für zumindest einen Teil der Reaktion besonders effizient genutzt werden kann. Dadurch kann in besonders vorteilhafter Weise beispielsweise das gesamte Volumen der Elektrode effizient für die Stromerzeugung nutzbar sein.

In vorteilhafter Ausgestaltung der Erfindung weisen zueinander benachbarte Kanäle jeweils eine andere Querschnittsfläche auf, wobei die Querschnittsflächen benachbarter Kanäle zueinander in einem vorgebbaren Verhältnis stehen. Mit anderen Worten hat ein erster Kanal eine erste Querschnittsfläche und ein zu dem ersten Kanal benachbarter zweiter Kanal eine zweite Querschnittsfläche, ist die erste Querschnittsfläche von der zweiten Querschnittsfläche unterschiedlich. Ein zu dem zweiten Kanal benachbarter dritter Kanal hat eine dritte Querschnittsfläche, welche von der zweiten Querschnittsfläche unterschiedlich ist. Dabei kann die dritte Querschnittsfläche gleich der ersten Querschnittsfläche oder aber ungleich der ersten Querschnittsfläche sein. Unter dem vorgebbaren Verhältnis ist zu verstehen, dass die jeweilige Querschnittsfläche des jeweiligen Kanals zu dem jeweils benachbarten Kanal ein bestimmtes, vorteilhaftes Verhältnis zueinander aufweist. So haben Simulationsberechnungen gezeigt, dass es beispielsweise vorteilhaft sein kann, wenn die erste Querschnittsfläche einem Wert von 1 entspricht, die zweite Querschnittsfläche beispielsweise einen Wert 2 aufweist und die dritte Querschnittsfläche einen Wert von 3. Damit wäre das vorgebbare beziehungsweise vorgegebenen Verhältnis 1:2:3. Somit kann eine Kanalbreite beispielsweise bei einer eckigen Kanalquerschnittsfläche beziehungsweise der Kanaldurchmesser bei einer runden Kanalquerschnittsfläche von einem zum anderen Kanal ein festes Verhältnis aufweisen. Durch die genannten unterschiedlichen Querschnittsflächen der insbesondere benachbarten Kanäle zueinander kann der Elektrolyt besonders vorteilhaft in der Elektrode verteilt werden.

In vorteilhafter Ausgestaltung der Kanäle sind benachbarte Kanäle jeweils im gleichen Abstand zueinander angeordnet. Das heißt, hat ein erster Kanal einen ersten Abstand zu einem zweiten Kanal, so ist der Abstand zwischen dem zweiten und einem dritten Kanal gleich dem ersten Abstand, wenn der erste und der zweite Kanal und der zweite und der dritte Kanal jeweils benachbart sind. Unter benachbart ist zu verstehen, dass zwischen erstem und zweitem Kanal sowie zwischen zweitem und drittem Kanal jeweils kein weiterer Kanal angeordnet ist. Durch die jeweils gleichen Abstände der benachbarten Kanäle zueinander kann in besonders vorteilhafter Weise die Elektrode gleichmäßig mit dem Elektrolyten versorgbar sein.

In vorteilhafter Ausgestaltung der Erfindung steigt oder sinkt der Abstand jeweils benachbarter Kanäle in eine Vorzugsrichtung der Elektrode. Mit anderen Worten nimmt der Abstand zwischen jeweils benachbarten Kanälen in einer Vorzugrichtung zu, beziehungsweise wird der Abstand entlang der Vorzugrichtung zwischen jeweils benachbarten Kanälen geringer. Das heißt, wenn die Kanäle beispielsweise parallel zur Längserstreckungsrichtung der Elektrode angeordnet sind, so ist ein Abstand zwischen den Kanälen in einer zur Längserstreckungsrichtung senkrechten Querrichtung der Elektrode zwischen einem ersten und einem zum ersten benachbarten zweiten Kanal ein erster Abstand, wohingegen der Abstand zwischen einem zweiten und einem dritten Kanal, welcher zu dem zweiten Kanal und nicht zu dem ersten Kanal benachbart ist, ein zweiter Abstand ist, welcher größer dem ersten Abstand ist. Ein vierter Kanal, welcher in der Vorzugsrichtung zu dem dritten Kanal benachbart ist, weist zu dem dritten Kanal einen dritten Abstand auf, welcher größer als der zweite Abstand ist. Dabei kann als Ausgangspunkt für die Vorzugsrichtung ein beliebiger Punkt der Elektrode gewählt werden, sodass beispielsweise in Querrichtung der Elektrode vom Zentrum startend zu jeweils einem Ende und zu einem jeweils anderen Ende der Elektrode in der Querrichtung der Abstand steigt beziehungsweise fällt. Durch die unterschiedlichen Abstände der Kanäle kann, insbesondere je nachdem, wie das Elektrolyt in die Halbzelle eingeleitet wird, in besonders vorteilhafter Weise der Elektrolyt an beziehungsweise durch die Elektrode geführt werden.

In vorteilhafter Ausgestaltung der Erfindung sind mehrere Kanäle mäanderartig zueinander angeordnet und zumindest teilweise miteinander direkt verbunden. Das heißt, ein bevorzugter Bezug einer Längserstreckungsrichtung eines jeweiligen Kanals zu der Längserstreckungsrichtung der Elektrode ist nicht gegeben, sodass beispielsweise ein erster Kanal senkrecht auf einem zweiten Kanal stehen kann. Alternativ oder zusätzlich kann die Längserstreckungsrichtung eines ersten Kanals schräg zu der Längserstreckungsrichtung eines weiteren Kanals verlaufen. Dabei können die einzelnen Kanäle der Leitstruktur derart zueinander angeordnet sein beziehungsweise eine Ausbreitung aufweisen, dass sich zumindest zwei Kanäle in wenigstens einem Teilbereich entlang ihrer Ausbreitungsrichtung schneiden und somit insbesondere besonders fluidisch leitend miteinander verbunden sind. Durch die mäanderartige Anordnung der Kanäle in der Leitstruktur kann in besonders vorteilhafter Weise der Elektrolyt durch die Elektrode förderbar sein beziehungsweise gefördert werden.

In vorteilhafter Ausgestaltung der Erfindung weist die Leitstruktur wenigstens einen Diffusor auf, mittels welchem der Elektrolyt an die Elektrode oder von der Elektrode weg führbar ist. Durch den wenigstens einen Diffusor kann eine Lenkung beziehungsweise Führung des Elektrolyten stattfinden, sodass der Elektrolyt besonders vorteilhaft mittels der Leitstruktur durch die Elektrode führbar ist beziehungsweise nach dem Durchführen durch die Elektrode beispielsweise besonders vorteilhaft zu einem Strom zusammenführbar ist, sodass die Elektrode die Halbzelle besonders effizient durchströmen kann.

Ein zweiter Aspekt der Erfindung betrifft ein Verfahren zum Herstellen wenigstens einer Leitstruktur eines Elektrodenelements einer Redox-Flussbatterie. Dabei weist das Elektrodenelement eine Elektrode und die Leitstruktur zum Leiten eines Elektrolyten auf. Um die Leitstruktur erfindungsgemäß herzustellen und dadurch eine Redox-Flussbatterie zu erhalten, durch welche der Elektrolyt besonders vorteilhaft insbesondere durch die jeweilige Halbzelle und somit die Elektrode leitbar ist, wird die Elektrode erfindungsgemäß mittels additiver Fertigung hergestellt. Alternativ oder zusätzlich kann die Leitstruktur durch das erfindungsgemäße Verfahren mittels Gießen der Elektrode mit Einlagen und anschließendem Ausbrennen der Einlagen gebildet werden, sodass die Leitstruktur in die Elektrode besonders vorteilhaft integriert werden kann. Darüber hinaus oder zusätzlich kann durch das erfindungsgemäße Verfahren mittels Eindrücken der Leitstruktur in die Elektrode die Leitstruktur in der Elektrode integriert werden. Somit ist die Leitstruktur beispielsweise mittels eines 3D-Druckverfahrens darstellbar, wodurch die Leitstruktur in der Elektrode in quasi beliebiger Ausgestaltung und an die jeweilige Anforderung des Elektrolyten angepasst ausgebildet werden kann. Dabei kann die Simulation mittels des genannten Widerstandsnetzwerks für eine geeignete Bestimmung der 3D-Struktur herangezogen werden. Durch das Gießen und anschließende Ausbrennen der Strukturen, welche insbesondere für die Kanäle in der Leitstruktur herangezogen werden kann, können diese besonders exakt ausgebildet werden, wodurch die Leitstruktur bei einem späteren Betrieb der Redox-Flussbatterie besonders vorteilhaft den Elektrolyten führen kann. Durch das Eindrücken der Leitstruktur, insbesondere der Kanäle, in das Elektrolyt und insbesondere eine daran anschließende Fixierung der Struktur beispielsweise ebenfalls durch ein Absteppen, wie es zur Ausbildung der Dichtebereiche verwendbar ist, kann die Leitstruktur beispielsweise besonders kosteneffizient hergestellt werden. Ferner kann insbesondere das Vlies oder aber auch die anderen genannten Grundstrukturen des Elektrolyten durch eine der genannten Herstellungsarten hergestellt werden.

Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ausführungsbeispiele der Erfindung werden nachfolgend anhand schematischer Zeichnungen näher erläutert. Es zeigt:
- FIG 1: schematische Darstellung einer erfindungsgemäßen Redox-Flussbatterie mit einem Elektrodenelement mit Elektrode und Leitstruktur;
- FIG 2: schematische Darstellung eines ersten Elektrodenelements mit unterschiedlichen Dichtbereichen in der Elektrode;
- FIG 3: schematische Darstellung eines zweiten Elektrodenelements mit unterschiedlichen Dichtbereichen in der Elektrode;
- FIG 4: schematische Darstellung eines dritten Elektrodenelements mit unterschiedlichen Dichtbereichen in der Elektrode, welche durch einen Stromableiter geprägt sind;
- FIG 5: schematische Darstellung eines vierten Elektrodenelements mit im Wesentlichen parallelen Kanälen;
- FIG 6: schematische Darstellung eines fünften Elektrodenelements mit den Kanälen;
- FIG 7: schematische Darstellung eines sechsten Elektrodenelements mit Kanälen mit unterschiedlichen Querschnittsflächen;
- FIG 8: schematische Darstellung eines siebten Elektrodenelements mit mäanderartig angeordneten Kanälen; und
- FIG 9: schematische Darstellung eines Schaltplans einer Widerstandsberechnung zur Simulation eines Elektrolytflusses durch eine Halbzelle der Redox-Flussbatterie.

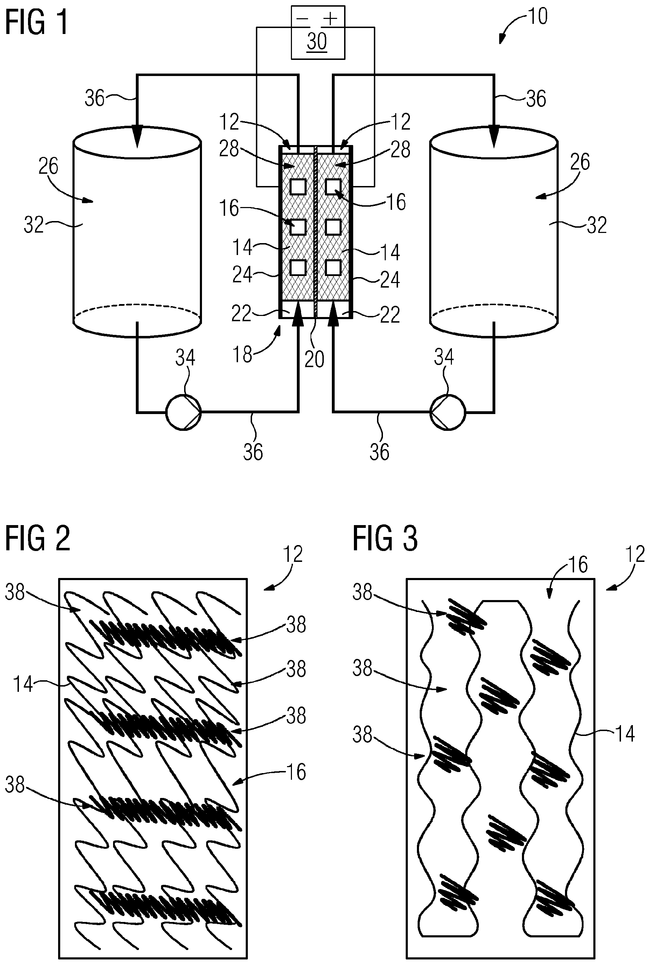

FIG 1 zeigt eine schematische Darstellung einer Redox-Flussbatterie 10 mit einem Elektrodenelement 12 mit Elektrode 14 und Leitstruktur 16. Dabei weist die Redox-Flussbatterie 10 wenigstens eine Zelle 18 auf, welche durch eine Membran 20 in Halbzellen 22 unterteilt ist. Dabei sind in jeder der Halbzellen 22 jeweils ein Elektrodenelement 12 sowie jeweils ein Stromableiter 24 angeordnet. Das jeweilige Elektrodenelement 12 ist in einem von einem Elektrolyten 26 durchströmbaren Innenraum 28 der jeweiligen Halbzelle 22 angeordnet und umfasst die Elektrode 14 sowie die Leitstruktur 16. Die Stromableiter 24 dienen dazu, den in der Zelle 18 zwischen den Halbzellen 22 fließenden elektrischen Strom abzugreifen, um ihn beispielsweise einem Verbraucher 30 zur Verfügung zu stellen. Andererseits kann die Redox-Flussbatterie 10 über die Stromableiter 24 geladen werden, falls beispielsweise ein Austausch der Elektrolyte 26 für das Laden der Redox-Flussbatterie 10 nicht infrage kommen sollte.

Die Redox-Flussbatterie 10 weist ferner Tanks 32 auf, in welchen jeweils der Elektrolyt 26 für eine Halbzelle 22 vorhaltbar ist. Mittels einer Pumpeinrichtung 34 kann der jeweilige Elektrolyt 26 über eine Leitung 36 in die jeweilige Halbzelle 22 gefördert werden. Der Elektrolyt 26 wird durch den jeweiligen Innenraum 28 der Zelle gefördert und strömt dabei durch beziehungsweise an der Elektrode 14 vorbei. Dabei ist der Elektrolyt 26 in einer der Halbzellen 22 beispielsweise positiv und in der anderen Halbzelle 22 beispielsweise negativ geladen, sodass es über die Membran 20, welche insbesondere eine Ionenaustauschmembran ist, zu einem Ladungsträgeraustausch kommen kann, wodurch Strom an den Stromableitern 24 beispielsweise für den Verbraucher 30 abgegriffen werden können. Der Elektrolyt 26 fließt anschließend weiter durch die jeweilige Halbzelle 22 und aus dieser heraus und wird wieder zu dem Tank 32 gefördert.

Bei dem Betrieb einer Redox-Flussbatterie 10 kann es zu Verlusten kommen, welche beispielsweise die elektrische Effizienz beziehungsweise Spannung herabsetzen könnten. So können diese Verluste an unterschiedlichen Stellen der Redox-Flussbatterie 10 auftreten und unterschiedliche Ursachen haben. Beispielsweise können hohe elektrische beziehungsweise ionische Widerstände oder eine eingeschränkte Reaktionskinetik oder hohe Diffusionswiderstände auftreten. Zusätzlich kann es zu konzentrationsabhängigen Verlusten unter anderem in einem Volumenfluss des Elektrolyten 26 kommen.

Um die Verluste besonders gering zu halten und den Elektrolyten 26 besonders vorteilhaft an die Elektrode 14 beziehungsweise durch die Elektrode 14 zu führen beziehungsweise diesen durch die Elektrode 14 durchströmen zu lassen, ist die Leitstruktur 16 zum Leiten des Elektrolyten 26 in die jeweils zugeordnete Elektrode 14 integriert.

Dabei ist die Elektrode 14 vorzugsweise als Vlies und/oder Papier und/oder Schaum und/oder Netz und/oder Geflecht und/ oder Filz und/oder Schwamm ausgebildet. Das heißt, die Elektrode 14 ist zumindest aus einem, insbesondere flexiblen, porösen Werkstoff gebildet beziehungsweise weist die Elektrode 14 eine poröse Grundstruktur auf, wobei der Werkstoff, insbesondere je nach verwendeten Elektrolyten 26, insbesondere Kohlenstoff aufweisen kann. Die Leitstruktur 16 ist somit in ein Vlies und/oder Papier und/oder Schaum und/oder Netz und/ oder Geflecht und/oder Filz und/oder Schwamm integriert.

Wird auf die Leitstruktur 16 in der Elektrode 14 verzichtet, wie es im Stand der Technik der Fall ist, kann keine optimale Verteilung des Elektrolyten 26 erreicht werden. Dies würde in einer inhomogenen Verteilung von Elektrolytströmen entlang der Membran 20 resultieren und beim Laden oder Entladen der Zelle 18 zu Konzentrationsunterschieden des Elektrolyten 26 in seiner Trägerflüssigkeit und somit letztendlich zu erhöhten Diffusionsverlusten führen.

FIG 2 zeigt eine schematische Darstellung eines ersten Elektrodenelements 12 mit unterschiedlichen Dichtebereichen 38 in der Elektrode 14. Durch die Ausbildung unterschiedlicher Dichtebereiche 38 in der Elektrode 14, welche beispielsweise als Vlies ausgebildet ist, wobei benachbarte Dichtebereiche 38 jeweils eine zueinander unterschiedliche Dichte aufweisen, kann beispielsweise eine Verwirbelung und/oder Vergleichmäßigung des Elektrolyten 26 in der Elektrode 14 stattfinden. So kann beispielsweise der Elektrolyt 26 homogenisiert werden, sodass eine besonders gleichmäßige Verteilung von Ionen in dem Elektrolyten 26 vorliegen kann, wodurch eine Reduktion beziehungsweise Oxidation an der durch die Porosität der Elektrode 14 gegebenen großen inneren Oberfläche möglichst überall stattfinden kann. Dadurch sind Diffusionsspannungen beziehungsweise Polarisationsverluste vorteilhafterweise besonders gering.

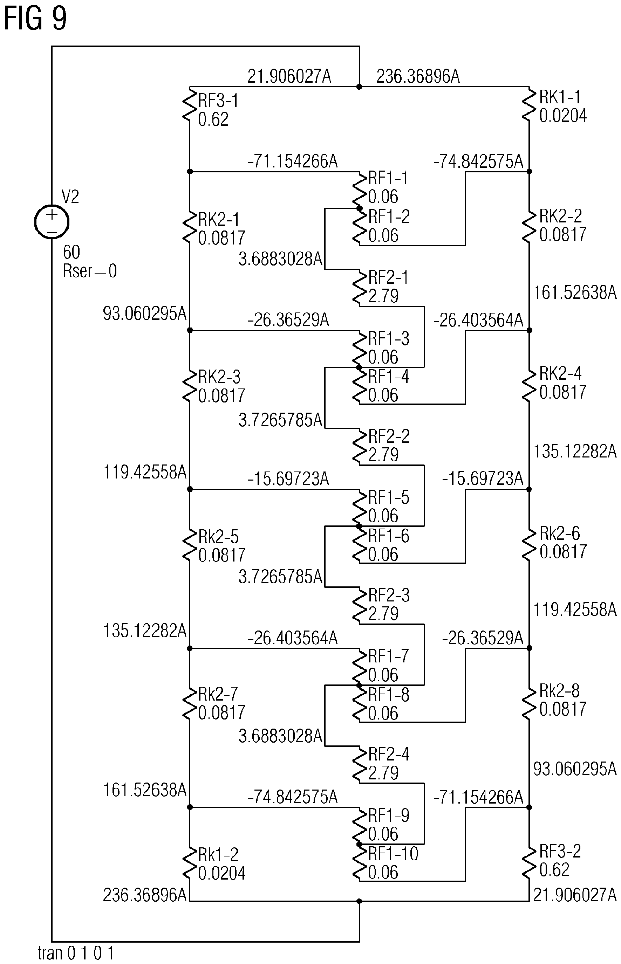

FIG 3 zeigt eine schematische Darstellung eines zweiten Elektrodenelements 12 mit einer alternativen Anordnung von unterschiedlichen Dichtebereichen 38 in der Elektrode 14. Vorteilhafterweise ist der jeweilige Dichtebereich 38 der Elektrode 14 abgesteppt, wodurch er insbesondere besonders formstabil und dadurch langlebig ausgebildet ist. Durch verschiedene Simulationsberechnungen insbesondere eines Widerstandsnetzwerks, wovon eines als Beispiel in FIG 9 gezeigt ist, hat sich ergeben, dass je nach verwendetem Elektrolyten 26 und der Verteilung einer aktiven Spezies, welche beispielsweise das Reduktionsmittel ist, eine asymmetrische Struktur beispielsweise der Dichtebereiche 38 in der Leitstruktur 16 von Vorteil sein kann.

Je nach verwendetem Elektrolyten 26, welcher beispielsweise Vanadium oder ein Polymer umfassen kann, kann aber auch eine wie in der FIG 3 gezeigte symmetrische Struktur der Leitstruktur 16 vorteilhaft sein. Vorteilhafterweise kann der Elektrolyt 26 über einen nicht gezeigten Diffusor an das Elektrodenelement 12 geführt werden. Dieser kann zusätzlich oder alternativ zu den beispielsweise gezeigten Dichtebereichen 38 einen weiteren Teil der Leitstruktur 16 ausbilden. Dadurch kann der Elektrolytstrom des Elektrolyten 26 beispielsweise durch den Diffusor beziehungsweise eine Diffusoreinrichtung dahingehend verändert werden, dass eine bessere Durchmischung des Elektrolyten 26 ermöglicht werden kann, wodurch Diffusionsverluste besonders gering gehalten werden können.

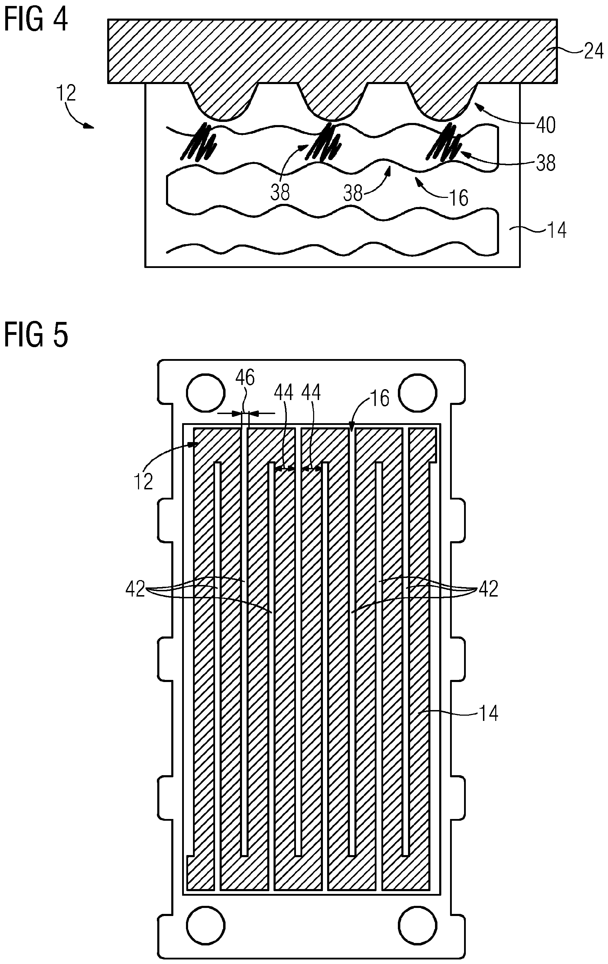

Durch die Dichtebereiche 38 der somit dichtevariable Elektrode 14, welche insbesondere eine Grundstruktur eines Vlieses aufweisen kann, kann das Elektrolyt 26 gezielt an die wenigstens eine Reaktionsfläche geführt werden. Als Reaktionsfläche kann eine Dreiphasengrenze angesehen werden, welches ein Bereich an der Elektrode 14 sein kann, an welchem zumindest ein Teil der Redox-Reaktion zur Stromgewinnung in der Redox-Flussbatterie 10 ablaufen kann. Ferner können durch die Dichtevariation der Leitstruktur 16 in der Elektrode 14 Druckverluste besonders gering gehalten werden und zusätzlich oder alternativ eine Diffusionspolarisation besonders gering gehalten werden. Eine Möglichkeit, die Dichtebereiche zu erzeugen, ist das Absteppen, sodass die dichtevariable Elektrode 14 beziehungsweise ein für die Elektrode 14 verwendeter Werkstoff bereits bei seiner Herstellung die Leitstruktur 16 aufweisen kann. Eine Alternative hierzu zeigt FIG 4.

FIG 4 zeigt eine schematische Darstellung eines dritten Elektrodenelements 12 mit unterschiedlichen Dichtebereichen 38 in der Elektrode 14, wobei die Dichtebereiche 38 durch den Stromableiter 24 in die Elektrode 14 geprägt sind. Dazu weist der Stromableiter 24 eine Formstruktur 40 auf. Die Formstruktur 40 kann beispielsweise aus einem dreidimensionalen Relief ausgebildet sein, welches sich an einer der Elektrode 14 zugewandten Oberfläche des Stromableiters 24 befindet beziehungsweise an oder auf dieser angeordnet ist. So kann zumindest ein Teil der Leitstruktur 16 durch den Stromableiter 24 bei einem Verpressen während eines Einbaus in die Redox-Flussbatterie 10 in einem Elektrodenmaterial, aus welchem die Elektrode 14 gebildet ist und welches eine homogene Dichte aufweist, durch die Verpressung eine unterschiedliche Verpressungsdichte erreicht werden. Dadurch ist in der Redox-Flussbatterie 10 die Leitstruktur 16 in der Elektrode 14 besonders vorteilhaft und formstabil integrierbar beziehungsweise integriert.

FIG 5 zeigt eine schematische Darstellung eines vierten Elektrodenelements 12 mit im Wesentlichen parallelen Kanälen 42. Vorteilhafterweise umfasst die Leitstruktur 16 wenigstens einen Kanal 42, welcher einen eckigen und/oder runden Querschnitt aufweist. Dabei kann vorteilhafterweise wenigstens eine Begrenzungsfläche des Kanals 42 zumindest teilweise deckungsgleich mit einem Teilbereich einer Oberfläche, insbesondere der äußeren, außenumfangsseitigen Oberfläche, der Elektrode 14 ausgebildet sein. Durch die in die Elektrode 14 eingearbeiteten Kanäle 42, kann das Elektrodenelement 12 insbesondere im Vergleich zu dem Stand der Technik besonders vorteilhaft einstückig ausgebildet sein. Dabei ist die äußere Oberfläche nicht die innere Oberfläche, welche durch die Porosität des Elektrodenmaterials gegeben ist, sondern die äußere Oberfläche ist die Fläche, welche die geometrische Form der Elektrode 14 hin zu einer Umgebung abgrenzt.

Durch die Kanäle 42 erfährt der durch die Elektrode 14 zu fördernde Elektrolyt 26 einen besonders geringen Strömungswiderstand. Dadurch kann er besonders vorteilhaft zu einer jeweiligen Reaktionsfläche der Elektrode 14 transportiert werden. Durch die Porosität der Elektrode 14 herrscht ein im Vergleich zu den Kanälen 42 größerer Strömungswiderstand innerhalb der Elektrode 14 abseits der Kanäle 42. Daher ist mittels der Kanäle 42 der Elektrolyt 26 besonders beweglich und vorteilhaft förderbar. Die Kanäle 42 sind dabei so ausgebildet, dass das Elektrolyt 26 zu einem entsprechenden, durch die Ausgestaltung der Kanäle 42 definierbaren Anteil durch die Kanäle 42 gefördert wird und somit jeweils ein definierbarer Anteil die jeweils aktive Zone beziehungsweise die jeweilige wenigsten eine Reaktionsfläche der Elektrode 14 erreichen kann. Somit kann durch die Leitstruktur 16 ein deutlich geringerer Strömungswiderstand in der Elektrode 14 realisiert werden, ohne die aktive Fläche beziehungsweise die Reaktionsflächen für einen Teil der Redox-Reaktion in der Elektrode 14 wesentlich zu verkleinern.

Durch die vorteilhafte, im Wesentlichen parallele Ausrichtung der Kanäle 42 zueinander in der Leitstruktur kann der Elektrolyt 26 besonders vorteilhaft gefördert werden. Um einen möglichst gleichmäßigen Strom des Elektrolyten 26 durch die Elektroden 14 zu erhalten, können benachbarte Kanäle 42 vorzugsweise im gleichen Abstand zueinander angeordnet sein. Wie in FIG 5 gezeigt, ist jeweils ein Kanal 42 abwechselnd hin zum oberen Ende der Abbildung und der benachbarte danebenliegende Kanal 42 hin zum unteren Rand der Bildebene in FIG 5 geöffnet, sodass die Kanäle 42 in einer Art Verzahnung angeordnet sind, wobei jeweils der Abstand 44 zwischen benachbarten Kanälen 42 gleich bleibt und die Kanäle 42 jeweils den gleichen Durchmesser beziehungsweise Querschnittsfläche 46 aufweisen. Vorzugsweise kann der Durchmesser eines Kanals 42 insbesondere eine Breite beziehungsweise einen Durchmesser von 1 bis 3 Millimeter aufweisen, wobei beispielsweise auch ein Durchmesser von bis zu 5 Millimetern oder mehr realisiert werden kann.

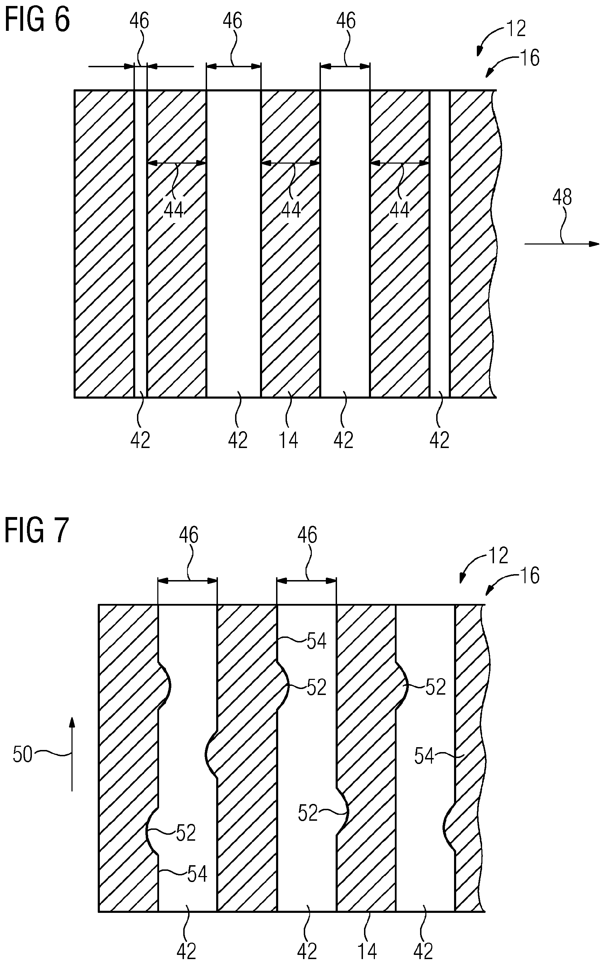

FIG 6 zeigt eine schematische Darstellung eines fünften Elektrodenelements 12 mit den Kanälen 42. Hier weisen benachbarte Kanäle 42 jeweils eine andere Querschnittsfläche 46 auf, wobei die Querschnittsfläche 46 benachbarter Kanäle 42 zueinander in einem vorgebbaren Verhältnis stehen. Ferner ist der Abstand 44 zwischen jeweils benachbarten Kanälen 42 so gewählt, dass er in eine Vorzugsrichtung 48 der Elektrode 14 steigt.

FIG 7 zeigt eine schematische Darstellung eines sechsten Elektrodenelements 12 mit Kanälen 42 mit unterschiedlichen Querschnittsflächen 46. Dabei ist die jeweilige Querschnittsfläche 46 eines jeweiligen Kanals 42, welche senkrecht zur Längserstreckungsrichtung 50 des Kanals 42 liegt, entlang der Längserstreckungsrichtung 50, derart ausgebildet, dass ihre Größe entlang der Längserstreckungsrichtung, insbesondere stetig, variiert. Alternativ ist wenigstens ein Formelement 52 an einer Kanalwandung 54 angeordnet, sodass zumindest in einem bestimmten Teilbereich des Kanals 42 die Querschnittsfläche 46 verkleinert oder vergrößert wird. Die Anordnung des jeweiligen Formelements 52, welches beispielsweise als konkave oder konvexe Ausbuchtung beziehungsweise Einbuchtung ausgebildet sein kann, kann beispielsweise als Druckminderer in dem jeweiligen Kanal 42 fungieren.

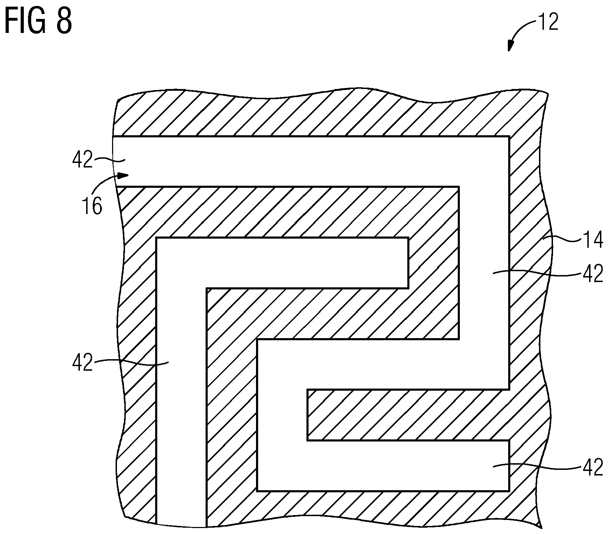

FIG 8 zeigt eine schematische Darstellung eines siebten Elektrodenelements 12 mit mäanderartig angeordneten Kanälen 42. Vorteilhafterweise können mehrere Kanäle 42 mäanderartig zueinander angeordnet sein und zumindest teilweise direkt, insbesondere fluidisch beziehungsweise elektrolytisch leitend, miteinander verbunden sein.

Zusammenfassend kann der Kanal 42 beziehungsweise eine Anordnung aus mehreren Kanälen 42 derart ausgebildet sein, dass Kanalbreiten benachbarter Kanäle 42 in einem festen Verhältnis von beispielsweise 1 zu 2 zu 3 stehen, wobei unter einem benachbarten Kanal 42 jeweils ein zu einem ersten Kanal 42 zweiter Kanal 42 ausgebildet ist und zwischen dem ersten Kanal 42 und dem zweiten Kanal 42 kein dritter Kanal 42 angeordnet ist. Durch eine Verwendung des genannten Diffusors kann eine Verteilung des Elektrolyten 26 unterschiedlich auf mehrere Kanäle 42 verteilt werden. So kann beispielsweise eine Verteilung des Elektrolyten 26 im Fall des 1 zu 2 zu 3 realisiert werden beziehungsweise kann beispielsweise eine Flusszunahme von 30 % pro Kanal 42 von innen, das heißt, einen Teilbereich, der näher an der Membran 20 des Elektrolyten 26 angeordnet ist, hin zu einem äußeren, das heißt weiter weg von der Membran 20 entfernten Teilbereich der Elektrode 14 realisiert werden. Somit kann die Leitstruktur 16, welche in der Elektrode 14 des Elektrodenelements 12 integriert ist, derart ausgebildet sein, dass eine jeweilige Strömungsrichtung in der Elektrode 14 des Elektrolyten 26 unabhängig von einem Ort in dem Innenraum 28 der Halbzelle 22 ist, sodass jeder beliebige Ort innerhalb des jeweiligen Innenraums 28 der Zelle 18 beziehungsweise der jeweiligen Halbzelle 22 von einem gleichen Volumenstrom des Elektrolyten 26 durchströmt werden kann.

Durch die gezeigten Ausführungsformen der Leitstruktur 16 des Elektrodenelements 12 kann beispielsweise der hydrodynamische Widerstand innerhalb der Elektrode 14 um bis zu einen Faktor 10 reduziert werden. Die jeweilige Querschnittsfläche 46 des jeweiligen Kanals 42 kann pro Kanal 42 beispielsweise vorteilhafterweise um bis zu 30 % variiert werden, sodass von außen nach innen beziehungsweise von dem Ort, an dem das Elektrolyt 26 in die Halbzelle 22 einströmt, zu dem Ort, aus dem das Elektrolyt 26 aus der Halbzelle 22 ausströmt, die Flächenzunahme um bis zu 30 % beziehungsweise einen Wert von 0 bis 30 % in der Änderung der Querschnittsfläche 46 vorteilhaft sein. Auch kann die Flächenzunahme beziehungsweise Flächenabnahme größer ausfallen als 30 %.

FIG 9 zeigt eine schematische Darstellung eines Schaltplans 56 für eine Widerstandsberechnung zur Simulation eines Elektrolytflusses durch eine Halbzelle 22 der Redox-Flussbatterie 10. Durch Simulationsrechnungen konnten die in den Figuren gezeigten Ausführungsformen der Leitstruktur 16 sowie deren Vorteile überprüft werden. Dazu wurde ein Derivat des Programms SPICE für die Berechnung verwendet. In dem Simulationsmodell entspricht die Spannung V der Pumpleistung, welche den Fluss des Elektrolyten 26 durch die Zelle 18 repräsentiert. Die Stromstärke I in dem Simulationsmodell entspricht dem Materiestrom, also der tatsächlichen Menge des Elektrolyten 26, welcher durch eine bestimmte Fläche beziehungsweise Durchströmvolumen durch die Zelle 18 gefördert wird.

## Patentansprüche

1. Redox-Flussbatterie (10) mit wenigstens einer Zelle (18), welche durch eine Membran (20) in Halbzellen (22) unterteilt ist, welche jeweils einen Stromableiter (24) und ein Elektrodenelement (12) umfasst, welches in einem von einem Elektrolyt (26) durchströmbaren Innenraum (28) der jeweiligen Halbzelle (22) angeordnet ist und eine Elektrode (14) sowie eine Leitstruktur (16) aufweist,
**dadurch gekennzeichnet, dass**
die Leitstruktur (16) zum Leiten des Elektrolyten (26) in die zugeordnete Elektrode (14) integriert ist.

2. Redox-Flussbatterie (10) nach Anspruch 1, **dadurch gekennzeichnet, dass** die Elektrode (14) als Vlies und/oder Papier und/oder Schaum und/oder Netz und/oder Geflecht und/oder Filz und/oder Schwamm ausgebildet ist, in welches beziehungsweise in welchen die Leitstruktur (16) integriert ist.

3. Redox-Flussbatterie (10) nach Anspruch 1 oder 2, **dadurch gekennzeichnet, dass** die Leitstruktur (16) durch unterschiedliche Dichtebereiche (38) der Elektrode (14) ausgebildet ist.

4. Redox-Flussbatterie (10) nach Anspruch 3, **dadurch gekennzeichnet, dass** der jeweilige Dichtbereich (38) der Elektrode (14) abgesteppt ist.

5. Redox-Flussbatterie (10) nach Anspruch 3 oder 4, **dadurch gekennzeichnet, dass** durch eine Formstruktur (40) des Stromableiters (24), welche in Kontakt mit der Elektrode (14) ist, die Dichtebereiche (38) in der Elektrode (14) mittels der Formstruktur (40) eingeprägt sind.

6. Redox-Flussbatterie (10) nach einem der vorhergehenden Ansprüche, **dadurch gekennzeichnet, dass** die Leitstruktur (16) einen Kanal (42) umfasst, welcher einen eckigen und/oder runden Querschnitt aufweist.

7. Redox-Flussbatterie (10) nach Anspruch 6, **dadurch gekennzeichnet, dass** die Querschnittfläche (46) des Kanals (42), welche senkrecht zur Längserstreckungsrichtung (50) des Kanals (42) liegt, entlang der Längserstreckungsrichtung (50), insbesondere stetig, eine veränderte Größe aufweist und/oder wenigsten ein Formelement (52) an einer Kanalwandung (54) angeordnet ist, welches in zumindest einem Teilbereiche des Kanals (42) die Querschnittsfläche (46) verkleinert oder vergrößert.

8. Redox-Flussbatterie (10) nach Anspruch 6 oder 7, **dadurch gekennzeichnet, dass** wenigstens eine Begrenzungsfläche des Kanals (42) zumindest teilweise deckungsgleich mit einem Teilbereich einer Oberfläche der Elektrode (14) ist.

9. Redox-Flussbatterie (10) nach Anspruch 6, 7 oder 8, **dadurch gekennzeichnet, dass** die Leitstruktur (16) mehrere Kanäle (42) umfasst, wobei die Kanäle (42) zueinander im Wesentlichen parallel ausgerichtet sind.

10. Redox-Flussbatterie (10) nach Anspruch 9, **dadurch gekennzeichnet, dass** benachbarte Kanäle (42) jeweils eine andere Querschnittsfläche (46) aufweisen, wobei die Querschnittsfläche benachbarter Kanäle (42) zueinander in einem vorgebbaren Verhältnis stehen.

11. Redox-Flussbatterie (10) nach Anspruch 9 oder 10, **dadurch gekennzeichnet, dass** jeweils benachbarte Kanäle (42) in gleichem Abstand (44) zueinander angeordnet sind.

12. Redox-Flussbatterie (10) nach Anspruch 9 bis 11, **dadurch gekennzeichnet, dass** der Abstand (44) jeweils benachbarter Kanäle (42) in eine Vorzugsrichtung der Elektrode (14) steigt oder sinkt.

13. Redox-Flussbatterie (10) nach Anspruch 6 bis 12, **dadurch gekennzeichnet, dass** mehrere Kanäle (42) mäanderartig zueinander angeordnet und zumindest teilweise miteinander direkt verbunden sind.

14. Redox-Flussbatterie (10) nach einem der vorhergehenden Ansprüche, **dadurch gekennzeichnet, dass** die Leitstruktur (16) wenigstens einen Diffusor aufweist, mittels welchem der Elektrolyt (26) an oder von der Elektrode (14) führbar ist.

15. Verfahren zur Herstellung wenigstens einer Leitstruktur eines Elektrodenelements einer Redox-Flussbatterie (10), welches eine Elektrode (14) und die Leitstruktur (16) zum Leiten eines Elektrolyten (26) aufweist,
**dadurch gekennzeichnet, dass**
mittels additiver Fertigung der Elektrode (14) und/oder durch Gießen der Elektrode (14) mit Einlagen und anschließendem Ausbrennen der Einlagen und/oder durch Eindrücken der Leitstruktur (16) in die Elektrode (14) die Leitstruktur (16) in die Elektrode (14) integriert wird.
